# EUROPÄISCHE PATENTSCHRIFT

(11) **EP 0 693 592 B1**
(45) Veröffentlichungstag und Bekanntmachung des Hinweises auf die Patenterteilung: **01.12.1999**
(21) Anmeldenummer: 95110475.1
(22) Anmeldetag: 05.07.1995
(51) Int. Cl.: E01C 23/082, E01H 11/00, A01M 21/02

(54) **Vorrichtung zum Pflegen von Hartplätzen oder Aschenbahnen mit einem Fahrzeug**
Device for the maintenance of hard courts or cinder tracks with a vehicle
Appareil pour l'entretien de courts durs ou cendrés avec un véhicule

(30) Priorität: 19.07.1994 DE 4425414
(43) Veröffentlichungstag der Anmeldung: 24.01.1996
(73) Patentinhaber: Mündler, Gerhard, 79249 Merzhausen (DE)
(72) Erfinder: Mündler, Gerhard, 79249 Merzhausen (DE)
(74) Vertreter: Schmitt, Hans, Dipl.-Ing.

(56) Entgegenhaltungen:
- CH-A- 435 355
- DE-A- 2 924 333
- DE-A- 4 235 446
- DE-A- 4 325 496
- FR-A- 2 468 695

## Beschreibung

Die Erfindung betrifft eine Vorrichtung zum Pflegen von Hartplätzen oder Aschenbahnen, mit einem Fahrzeug und einem daran angeordneten Werkzeug zur Bearbeitung der Oberfläche des Hartplatzes oder der Aschenbahn, mit einem quer zur Fahrtrichtung orientierten Schneidmesser, welches so weit gegenüber dem es tragenden Fahrzeug abgesenkt oder absenkbar ist, daß das Schneidmesser bei der Bewegung in Fahrtrichtung unter der oberen Schicht des Hartplatzes oder der Aschenbahn verschiebbar ist.

Es sind bereits verschiedene Vorrichtungen mit Fahrzeugen bekannt, mit denen Hartplätze, in der Regel Sportplätze, oder Aschenbahnen bearbeitet und gepflegt werden können. Beispielsweise kennt man entsprechende Vorrichtungen zur Auflockerung der Oberfläche solcher Plätze. Andere Vorrichtungen dienen zum Walzen oder Verfestigen oder auch zum Reinigen.

Aus DE-A-4 235 446 ist eine Vorrichtung zur Pflege, insbesondere zum Frühjahrsputz, von Tennisplätzen und dabei zum Lockern und Abtragen der obersten, während des Winters aufkommenden Ziegelmehlschicht bekannt. Diese umfaßt einen als Fahrzeug dienenden fahrbaren Rahmen, an welchem Lockerungsschare und ein Räumschild angeordnet sind. Die Lockerungsschare überstreichen dabei die Gerätebreite und wirken als Schneidmesser und sind wie das Räumschild tiefer als die Aufstandsfläche der Stützräder einstellbar. Die abgetragene verbrauchte obere Ziegelmehlschicht muß anschließend beseitigt werden. Kollidiert eine Lockerungsschar oder das Räumschild mit einem Stein oder dergleichen unter der Oberfläche verborgenen harten Körper und wird dadurch beschädigt, ist eine relativ umfangreiche Reparatur oder gar der Ersatz dieser Teile erforderlich.

Bei den in der Regel dem Sport dienenden Hartplätzen und bei Aschenbahnen, die also nicht mit Kunststoff beschichtet oder versiegelt sind, besteht das Problem, daß ungewollt Pflanzen, insbesondere Gras wachsen kann. Bisher konnte solch ungewollter Pflanzenwuchs durch das Sprühen oder Streuen von Herbiziden oder dergleichen Pflanzenvernichtern entfernt werden. Solche Gifte zur Pflanzenbekämpfung sind jedoch nachteilig für Grundwasser und Umwelt und werden deshalb nicht mehr gewünscht beziehungsweise sind verboten.

Es ist auch bereits bekannt, den ungewollten Pflanzenwuchs durch Abbrennen zu entfernen, was jedoch wiederum zu einer Umweltbelastung und außerdem häufig zu einem unbefriedigenden Ergebnis führt, weil die Pflanzen schnell wieder nachwachsen. Dieses Nachwachsen ist selbst dann zu befürchten, wenn die ungewollten Pflanzen von Hand entfernt werden, was sehr zeitaufwendig und arbeitsintensiv ist, selbst wenn entsprechende Hilfs-Handwerkszeuge benutzt werden.

Es besteht deshalb die Aufgabe beziehungsweise das Problem, eine Vorrichtung der eingangs erwähnten Art zu schaffen, die einfach im Aufbau ist und dennoch eine effektive und schnelle Pflege solcher Hartplätze und Aschenbahnen in dem Sinne erlaubt, daß ungewollter Pflanzenwuchs effektiv und für eine befriedigend lange Zeit entfernt werden kann, wobei es möglich sein soll, im Falle einer Beschädigung des Schneidmessers nicht das gesamte Schneidmesser ersetzen oder reparieren zu müssen.

Diese Aufgabe wird mit den Mitteln und Merkmalen des Patentanspruches 1 gelöst.

Das Schneidmesser befindet sich also in Gebrauchsstellung mit seiner Schneide tiefer als die Berührstellen des Fahrwerkes des Fahrzeuges mit dem Hartplatz oder der Aschenbahn und wird durch seine Schrägstellung und die Fahrbewegung zu einem Unterschnitt unterhalb der Oberfläche des Platzes veranlaßt, so daß unerwünschte Pflanzen und insbesondere deren Wurzeln abgetrennt oder durchgetrennt werden. Die nach kurzer Zeit verdorrten abgeschnittenen Pflanzen können einfach zusammengefegt oder mit einem Schleppnetz beseitigt werden. Die obere Fläche des Hartplatzes wird dabei zwar geringfügig aufgelockert, jedoch handelt es sich dabei praktisch nur um einen Zentimeter oder dergleichen, was also für die Benutzung des Platzes unschädlich ist oder im Bedarfsfalle durch Walzen auch wieder verfestigt werden kann. Praktisch kann das Schneidmesser durch die Fahrbewegung des Fahrzeuges unter der Oberfläche und der oberen Schicht hindurchgezogen werden und dabei unerwünschte Pflanzen effektiv tiefer als ihr oberflächlicher Wuchs abtrennen, so daß mit einem erneuten Wachstum solcher Pflanzen nicht oder erst nach relativ langer Zeit zu rechnen ist, wonach dann das Fahrzeug erneut eingesetzt werden kann, da es sehr schnell die Bearbeitung großer Flächen erlaubt.
Da das Schneidmesser an einem mit dem Fahrzeug verbundenen Messerbalken befestigt ist und seine Schneide gegenüber dem Messerbalken in vertikaler Richtung einen Zwischenraum hat, kann es bei der Benutzung der Vorrichtung unterhalb der oberen Schicht des Hartplatzes durch diese hindurchbewegt werden, während der eigentliche Messerbalken sich darüber befindet. Die obere Schicht kann dann über den Messerrücken und unter dem Messerbalken hindurchgleiten, wobei mit Abstand zueinander angeordnete Haltestege zwischen Messerbalken und Schneidmesser praktisch nicht stören, da sie nur relativ schmal sind.

Da das Schneidmesser aus mehreren sich ergänzenden Messerstücken zusammengesetzt ist, die jeweils einzeln auswechselbar befestigt sind, ist es möglich, bei einer Beschädigung des Messers durch einen Stein oder dergleichen unter der Oberfläche verborgenen harten Körper nur das jeweilige Messerstück ersetzen oder reparieren zu müssen, nicht aber das gesamte Schneidmesser. Darüber hinaus ist so ein Nachschleifen einzelner Messerstücke möglich, was bei der Handhabung einfacher ist, als wenn ein langes, durchgehendes Schneidmesser nachgeschliffen oder repariert werden muß.

In diesem Zusammenhang ist besonders vorteilhaft, daß der Messerbalken einzelne, jeweils ein Messerstück tragende, getrennte, aber sich fortsetzende oder berührende Messerhalter trägt, welche gegebenenfalls einzeln demontierbar sind. Somit kann bei einer Beschädigung des eigentlichen Messerhalters auch jeweils nur ein solcher einzelner Messerhalter ersetzt werden, statt daß der gesamte Messerbalken ausgetauscht werden muß.

Günstig ist es, wenn die Schneide gegenüber dem Messerbalken in Fahrtrichtung vorsteht. Dadurch ist das Schneidmesser an dem Messerbalken gut zugänglich und kann durch Lösen von Halteschrauben einfach demontiert und ausgetauscht werden, falls es beschädigt oder verschlissen ist.

Der Verlauf der Schneide kann rechtwinklig oder etwas schräg zur Fahrtrichtung angeordnet sein. Somit kann über die gesamte quer zur Fahrtrichtung orientierte Länge des Schneidmessers eine effektive Bearbeitung erfolgen, das heißt mit einer Fahrt kann ein Streifen des Platzes oder der Aschenbahn von der Länge des Schneidmessers von ungewollten Pflanzen befreit werden.

Die Neigung des Querschnittes des Schneidmessers gegenüber der Fahrtrichtung kann etwa 5° bis 35°, insbesondere etwa 10°, betragen und insbesondere verstellbar sein. Somit ist eine Anpassung an unterschiedliche Hartplätze und Aschenbahnen möglich und je nach Bodenverhältnissen kann eine möglichst günstige Schneidestellung zum Unterschneiden der oberen Fläche eingestellt werden.

Dabei kann die Neigung des Querschnittes des Schneidmessers je nach Geschwindigkeit des Fahrzeuges wählbar sein. Diese Geschwindigkeit kann zwischen 5 km/h und etwa 20 km/h betragen. Bei einer zu geringen Geschwindigkeit ergibt sich nämlich keine gut geführte Bewegung des Schneidmessers unterhalb der Oberfläche und kein gutes Abwerfen der oberen, von dem Schneidmesser unterschnittenen Schicht eines Hartplatzes oder einer Aschenbahn. Eine zu hohe Geschwindigkeit könnte hingegen das Gerät und das Schneidmesser überlasten und zu dynamischen Erscheinungen führen, die wiederum der Oberfläche des zu bearbeitenden Platzes oder dergleichen unzuträglich wäre. Eine mittlere Geschwindigkeit von etwa 10 km/h bis 12 km/h oder 15 km/h ergibt einerseits eine effektive und schnelle Bearbeitung und andererseits auch eine weitgehend schonende Behandlung des Gerätes und des Platzes.

Besonders zweckmäßig ist es, wenn der Messerbalken mit dem Schneidmesser in der Neigung gegenüber der Fahrtrichtung und in der Höhe verstellbar ist. Dadurch kann eine Anpassung an unterschiedliche Plätze und eventuell unterschiedliche dort unerwünscht wachsende Pflanzen noch besser vorgenommen werden. Der Benutzer kann dann wahlweise die gesamte Höhe des Schneidmessers oder seine Schrägstellung oder auch beides anpassen.

Der Messerbalken kann zweckmäßigerweise zwischen zwei Achsen des Fahrzeuges angeordnet sein, was den Vorteil hat, daß sich eine gute Führung für diesen Messerbalken während der Fahrt ergibt.

Es ist aber auch möglich, daß der Messerbalken vor oder hinter dem Fahrzeug angeordnet ist. Er kann dann auch geschoben oder gezogen werden. Dabei ist es besonders vorteilhaft, wenn der Messerbalken eigene Räder oder ein eigenes Fahrgestell mit Rädern hat, so daß auch beim Schieben oder Ziehen dieses als Schneidegerät wirkenden Messerbalkens eine gute Führung gegeben ist.

Da der Messerbalken lösbar am Fahrzeug befestigt ist, kann das Fahrzeug für andere Bearbeitungszwecke eingesetzt werden und umgekehrt kann ein für andere Zwecke der Platz- oder Bodenpflege dienendes Fahrzeug, dessen Werkzeuge ebenfalls lösbar sind, sehr schnell mit dem Schneidmesser und Messerbalken ausgerüstet und dadurch für den vorbeschriebenen Zweck der Pflanzenentfernung nutzbar gemacht werden. Beispielsweise kann ein schon bekanntes und vorhandenes Fahrzeug zur Pflege von Golfplätzen und insbesondere ein solches Fahrzeug mit Bunker- und Feldrechen verwendet werden, bei welchem das Rechenwerkzeug durch den Messerbalken ersetzt werden kann. Dadurch ist die erfindungsgemäße Vorrichtung in vielen Fällen besonders preiswert zu realisieren, wo nämlich entsprechende Fahrzeuge schon vorhanden sind. Auf der anderen Seite kann ein Käufer der erfindungsgemäßen Vorrichtung mit Fahrzeug dieses auch mit den an sich bekannten Werkzeugen zum Pflegen von Golfplätzen versehen und somit den Einsatzzweck eines Fahrzeuges mit Messerbalken durch den Austausch dieses Messerbalkens vergrößern.

Insgesamt ergibt sich eine Vorrichtung, mit der nachhaltig unerwünscht gewachsene Pflanzen von Hartplätzen oder Aschenbahnen entfernt werden können, wobei dies effektiv und sehr schnell durchführbar ist und giftige oder umweltbelastende Stoffe oder Methoden oder aufwendige Handarbeit vermieden werden.

Nachstehend ist ein Ausführungsbeispiel der Erfindung anhand der Zeichnung näher beschrieben. Dabei ist das weitgehend beliebige Fahrzeug der besseren Übersicht und Einfachheit wegen nicht mit dargestellt. Im einzelnen zeigt:
- Fig.1: eine schaubildliche Darstellung des an einem Fahrzeug angebrachten Messerbalkens mit Messerhaltern und daran befestigten Messerstücken, die zusammen ein Schneidmesser ergeben,
- Fig.2: eine Seitenansicht des Messerbalkens mit Schneidmesser,
- Fig.3: eine Draufsicht und
- Fig.4: eine Vorderansicht des Messerbalkens mit Schneidmesser und Messerhaltern,
- Fig.5: in vergrößertem Maßstab einen Querschnitt durch den Messerbalken und das Schneidmesser mit gleichzeitiger Ansicht der Befestigungsvorrichtung für den Messerbalken an dem Fahrzeug und
- Fig.6: einen Teillängsschnitt des Messerbalkens mit einem Messerhalter mit Blick auf daran befestigte Messerstücke des Schneidmessers.

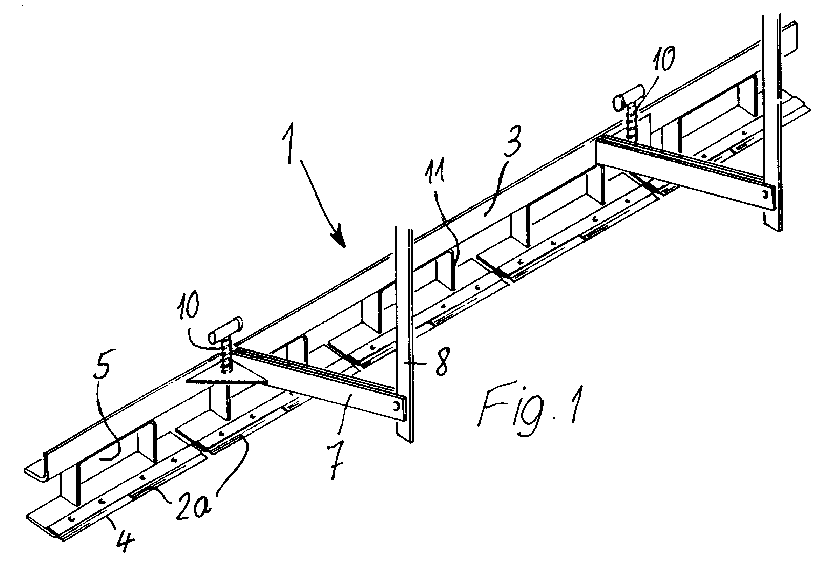

Eine Vorrichtung zum Entfernen unerwünschten Pflanzenwuchses von Hartplätzen, insbesondere Sportplätzen, oder Aschenbahnen besteht im wesentlichen aus einem nicht näher dargestellten Fahrzeug und einem daran angeordneten, im Ganzen mit 1 bezeichneten Werkzeug, welches besonders deutlich in Figur 1 dargestellt ist. Mit diesem Werkzeug 1 erfolgt die eigentliche Bearbeitung der Oberfläche des Hartplatzes oder der Aschenbahn. Wesentlicher Teil dieses Werkzeuges 1 ist ein in Gebrauchsstellung quer zur Fahrtrichtung des nicht näher dargestellten Fahrzeuges orientiertes Schneidmesser 2, dessen Querschnitt gemäß Figur 2 und 5 in Fahrtrichtung, die durch den Pfeil PF1 angedeutet ist, schräg nach vorne und nach unten geneigt ist. Dabei ist dieses Schneidmesser 2 soweit gegenüber dem es tragenden Fahrzeug abgesenkt oder absenkbar angebracht, daß es bei der Bewegung in Fahrtrichtung unter die oberste Schicht des Hartplatzes oder der Aschenbahn gelangt und dort verschiebbar ist. Es schneidet gewissermaßen beim ersten Anfahren in die Oberfläche ein, unterschneidet diese bei seiner weiteren Fahrt und bewegt sich dann unterhalb der obersten Oberfläche über den Hartplatz, wobei diese oberste Schicht über den Messerrücken hinweggleiten kann, so daß Pflanzen oder deren Wurzeln unter der Oberfläche abgeschnitten werden.

Das Schneidmesser 2 ist dabei an einem mit dem Fahrzeug verbundenen Messerbalken 3 befestigt und seine Schneide 4 hat gegenüber dem Messerbalken 3 in vertikaler Richtung einen Zwischenraum 5, so daß das die Oberfläche des Hartplatzes oder die Aschenbahn bildende Material zwischen Messer 2 und Messerbalken 3 beim hindurchgleiten des Schneidmessers 2 unter der Oberfläche des Hartplatzes hindurchtreten kann. In Fahrtrichtung steht dabei die Schneide 4 des Schneidmessers 2 gegenüber dem Messerbalken 3 etwas vor. Somit ist das Schneidmesser 2 an dem Messerbalken 3 gut zugänglich und kann durch Lösen der Halteschrauben 6 einfach demontiert und ausgetauscht werden, falls es beschädigt oder verschlissen ist.

Der Verlauf der Schneide 4 ist dabei rechtwinklig oder etwas schräg zur eigentlichen Fahrtrichtung angeordnet. Die Neigung des Querschnittes des Schneidmessers 2 gegenüber der Fahrtrichtung kann etwa 5° bis 35° betragen und ist im Ausführungsbeispiel mit etwa 10° dargestellt. Gegebenenfalls kann diese Neigung verstellbar sein, indem beispielsweise die Tragarme 7 für den Messerbalken 3 an einem am Fahrzeug angreifenden Träger 8 in Lochungen 9 in unterschiedlicher Höhe verankert werden kann. Zusätzlich ist der Messerbalken 3 mit einem Federbolzen 10 am Fahrwerk befestigt, so daß eine gewisse Nachgiebigkeit und Anpassbarkeit gegeben ist.

Die Schrägstellung kann gegebenenfalls je nach Geschwindigkeit des Fahrzeuges wählbar sein, wobei diese Geschwindigkeit zwischen 5 km/h und etwa 20 km/h betragen kann. Dies führt zu einem guten Abwerfen der oberen, von dem Schneidmesser 2 unterschnittenen Schicht des Hartplatzes bei der Bearbeitung und dem Durchziehen des Schneidmessers 2 unterhalb dieser obersten Schicht.

Gegebenenfalls kann der Messerbalken 3 mit dem Schneidmesser 2 nicht nur in der Neigung gegenüber der Fahrtrichtung sondern auch noch in der Höhe verstellbar sein, um eine Anpassung an unterschiedliche Plätze und eventuell unterschiedliche, dort unerwünscht wachsende Pflanzen zu ermöglichen.

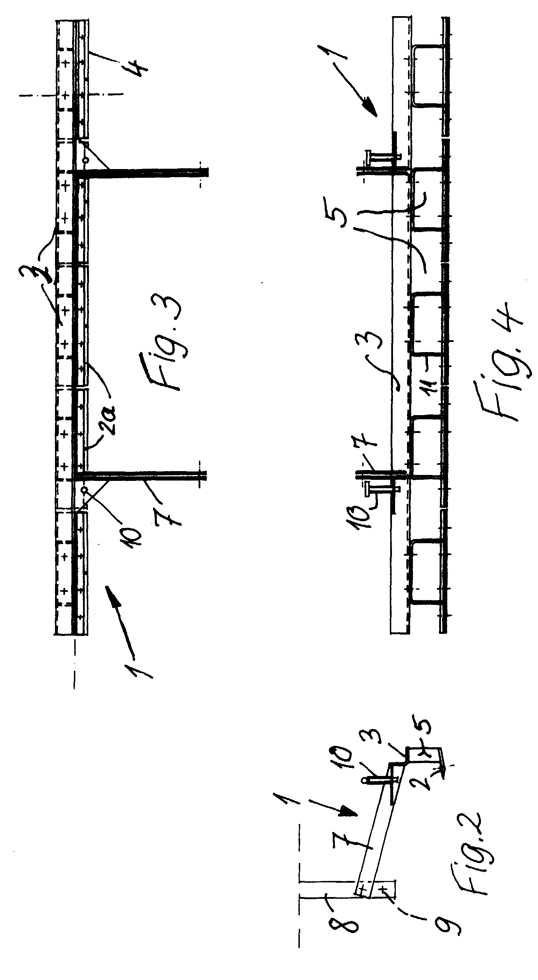

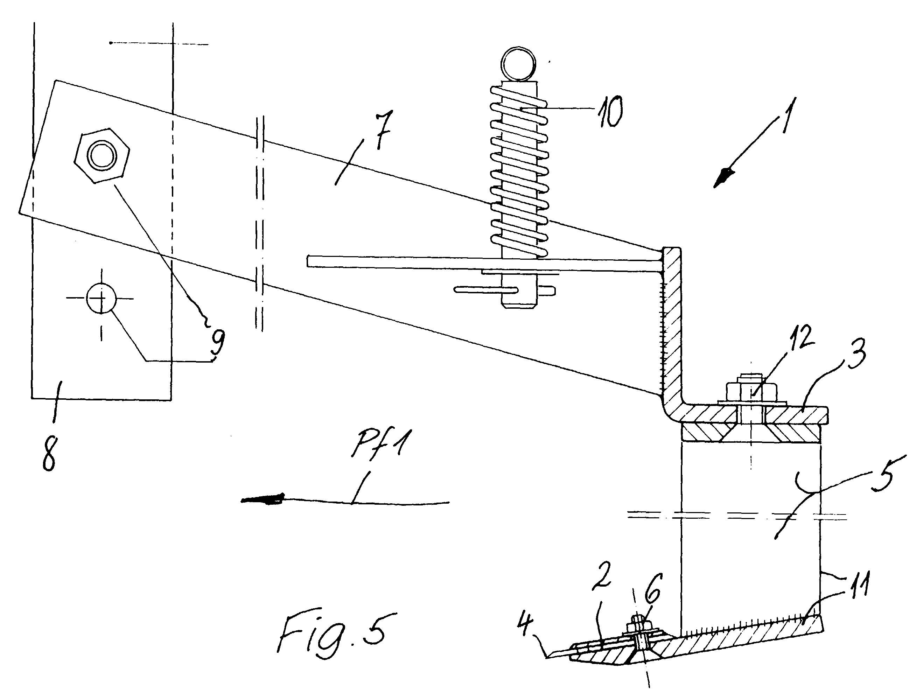

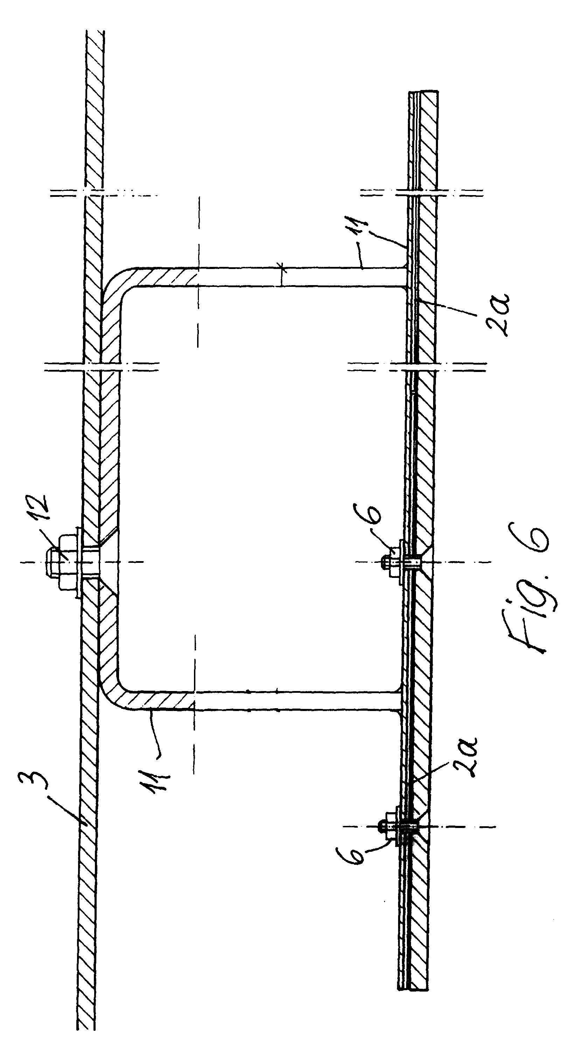

In den Figuren 3, 4 und 6 erkennt man, daß das Schneidmesser 2 in vorteilhafter Weise aus mehreren sich ergänzenden Messerstücken 2a zusammengesetzt ist, die jeweils einzeln austauschbar oder auswechselbar mit Schrauben 6 befestigt sind, so daß bei einer Beschädigung des Schneidmessers 2 nicht das gesamte Schneidmesser sondern nur ein Messerstück 2a ausgetauscht oder repariert werden muß.

Der Messerbalken 3 trägt seinerseits einzelne, jeweils Messerstücke 2a tragende, getrennte, aber sich fortsetzende oder berührende Messerhalter 11, welche ebenfalls mittels Schrauben 12 einzeln demontierbar sind. Falls durch steinigen Boden größere Schäden an den Schneidmessern 2 beziehungsweise deren Messerhaltern 11 auftreten, können auch diese einzeln ersetzt werden.

In nicht näher dargestellter Weise kann der Messerbalken 3 beziehungsweise das gesamte Werkzeug 1 zwischen zwei Achsen des Fahrzeuges angeordnet sein, so daß sich während des Einsatzes eine gute Führung für den Messerbalken 3 und insbesondere für das Schneidmesser 2 ergibt. Es ist aber auch möglich, daß der Messerbalken 3 vor oder hinter dem Fahrzeug angehängt und angeordnet ist. Dabei kann er dann eventuell eigene Räder oder ein eigenes Fahrgestell mit Rädern haben, um eine gute Führung zu ergeben. Diese kann dann durch die Kombination der Räder des Fahrzeuges mit denen des Werkzeuges 1 besonders effektiv sein.

In Figur 5 wird deutlich, daß der Messerbalken 3 mit seinem Federbolzen 10 einerseits und an dem Träger 8 über die Lochungen 9 andererseits lösbar am Fahrzeug befestigt ist. Somit kann ein schon existierendes Fahrzeug mit entsprechenden Befestigungsstellen nachträglich oder zusätzlich mit dem Messerbalken 3 ausgestattet und somit für einen zusätzlichen Zweck nutzbar gemacht werden.

Versuche haben gezeigt, daß durch das geneigte Schneidmesser 2 auf Hartplätzen oder Aschenbahnen unerwünschte Pflanzen schnell und effektiv unterhalb der Oberfläche abgeschnitten werden können, so daß ein Nachwachsen nicht oder erst nach langer Zeit erfolgt. Dabei wird aufwendige Handarbeit vermieden.

## Patentansprüche

1. Vorrichtung zum Pflegen von Hartplätzen oder Aschenbahnen, mit einem Fahrzeug und einem daran angeordneten Werkzeug (1) zur Bearbeitung der Oberfläche des Hartplatzes oder der Aschenbahn, mit einem quer zur Fahrtrichtung (Pf1) orientierten Schneidmesser (2), welches soweit gegenüber dem es tragenden Fahrzeug abgesenkt oder absenkbar ist, daß das Schneidmesser (2) bei der Bewegung in Fahrtrichtung unter der oberen Schicht des Hartplatzes oder der Aschenbahn verschiebbar ist, **dadurch gekennzeichnet**, daß der Querschnitt des Schneidmessers (2) in Fahrtrichtung derart schräg nach vorne und nach unten geneigt ist, daß die Schneide (4) des Schneidmessers (2) tiefer als das übrige Schneidmesser (2) angeordnet ist, daß das Schneidmesser (2) an einem mit dem Fahrzeug verbundenen Messerbalken (3) befestigt ist und seine Schneide (4) gegenüber dem Messerbalken (3) in vertikaler Richtung einen Zwischenraum (5) oder Abstand hat, wobei zwischen dem Messerbalken (3) und dem Schneidmesser (2) Haltestege angeordnet sind, daß das Schneidmesser (2) aus mehreren sich ergänzenden oder fortsetzenden Messerstücken (2a) zusammengesetzt ist, die jeweils einzeln austauschbar oder auswechselbar befestigt sind, und daß der Messerbalken (3) einzelne, jeweils ein Messerstück (2a) tragende, getrennte oder sich fortsetzende oder berührende, die Haltestege aufweisende Messerhalter (11) trägt.

2. Vorrichtung nach Anspruch 1, dadurch gekennzeichnet, daß die Schneide (4) gegenüber dem Messerbalken (3) in Fahrtrichtung vorsteht.

3. Vorrichtung nach Anspruch 1 oder 2, dadurch gekennzeichnet, daß die Neigung des Querschnittes des Schneidmessers (2) gegenüber der Fahrtrichtung etwa 5° bis 35°, insbesondere etwa 10° beträgt.

4. Vorrichtung nach einem der Ansprüche 1 bis 3, dadurch gekennzeichnet, daß die Neigung des Querschnittes des Schneidmessers (2) verstellbar ist.

5. Vorrichtung nach einem der Ansprüche 1 bis 4, dadurch gekennzeichnet, daß die Neigung des Querschnittes des Schneidmessers (2) je nach Geschwindigkeit des Fahrzeuges wählbar ist.

6. Vorrichtung nach einem der Ansprüche 1 bis 5, dadurch gekennzeichnet, daß der Messerbalken (3) mit dem Schneidmesser (2) in der Neigung gegenüber der Fahrtrichtung und in der Höhe verstellbar ist.

7. Vorrichtung nach einem der Ansprüche 1 bis 6, dadurch gekennzeichnet, daß die Messerhalter (11) einzeln demontierbar sind.

8. Vorrichtung nach einem der Ansprüche 1 bis 7, dadurch gekennzeichnet, daß der Messerbalken (3) vor oder hinter dem Fahrzeug angeordnet ist.

9. Vorrichtung nach Anspruch 8, dadurch gekennzeichnet, daß der Messerbalken (3) eigene Räder oder ein eigenes Fahrgestell mit Rädern hat.

10. Vorrichtung nach einem der Ansprüche 1 bis 7, dadurch gekennzeichnet, daß der Messerbalken (3) zwischen zwei Achsen des Fahrzeuges angeordnet ist.

## Claims

1. A device for the maintenance of hard courts or cinder tracks, with a vehicle and a tool (1) disposed thereon for working on the surface of the hard court or cinder track, having a cutting blade (2) orientated transversely to the direction of travel of the vehicle (Pf1) which is, or which can be lowered so far, with regard to the vehicle which supports it, that the cutting blade (2) can be moved below the upper layer of the hard court or cinder track when moving in the direction of travel, characterised in that the cross-section of the cutting blade (2) is inclined obliquely forwards and downwards in the direction of travel in such a way that the cutting edge (4) of the cutting blade (2) is disposed deeper than the rest of the cutting blade (2), that the cutting blade (2) is attached to a blade beam (3) which is connected to the vehicle and, with regard to the blade beam in the vertical direction, its cutting edge (4) has an intermediate space (5) or clearance wherein holding webs are disposed between the blade beam (3) and the cutting blade (2), that the cutting blade (2) is composed of a plurality of complementary or continuing blade pieces (2a) which are each attached so as to be individually exchangeable or replaceable, and that the blade beam (3) supports individual blade holders (11), disposed separately, continuously or in contact with each other and having the holding webs and carrying a blade piece (2a) in each case.

2. A device according to claim 1, characterised in that the cutting edge (4) projects with regard to the beam blade (3) in the direction of travel.

3. A device according to claim 1 or 2, characterised in that the inclination of the cross-section of the cutting blade (2) is approximately 5° to 15°, especially approximately 10°, with regard to the direction of travel.

4. A device according to one of claims 1 to 3, characterised in that the inclination of the cross-section of the cutting blade (2) is adjustable.

5. A device according to one of claims 1 to 4, characterised in that the inclination of the cross-section of the cutting blade (2) is selectable dependent on the speed of the vehicle.

6. A device according to one of claims 1 to 5, characterised in that the blade beam (3) with the cutting blade (2) can be adjusted in its inclination with regard to the direction of travel and in its height.

7. A device according to one of claims 1 to 6, characterised in that the blade holders (11) can be removed individually.

8. A device according to one of claims 1 to 7, characterised in that the blade beam (3) can be disposed behind or in front of the vehicle.

9. A device according to claim 8, characterised in that the blade beam (3) has its own wheels or its own chassis with wheels.

10. A device according to one of claims 1 to 7, characterised in that the blade beam (3) is disposed between two axles of the vehicle.

## Revendications

1. Dispositif pour l'entretien de courts durs ou cendrés avec un véhicule équipé d'un outil (1) pour le traitement de la surface du court dur ou cendré, avec une lame (2) orientée de façon transversale par rapport au sens de marche (Pf1) et qui peut être abaissée ou s'abaisser par rapport au véhicule qui la porte dans une telle mesure que la lame (2) peut être déplacée sous la couche supérieure du court dur ou cendré lors du mouvement dans le sens de la marche, **caractérisé en ce que** la section transversale de la lame (2) dans le sens de la marche est inclinée à l'oblique vers l'avant et vers le bas de telle sorte que le tranchant (4) de la lame (2) est placé plus profondément que le reste de la lame (2), **en ce que** la lame (2) est fixée à une barre porte-lame (3) reliée au véhicule et qu'en direction verticale, un espace intermédiaire (5) ou un écart sépare le tranchant (4) de la barre porte-lame (3), des baguettes de maintien étant placées entre la barre porte-lame (3) et la lame (2), **en ce que** la lame (2) est composée de plusieurs éléments de lame (2a) se complétant ou se prolongeant et fixés respectivement de façon à pouvoir être changés ou échangés de façon individuelle, et **en ce que** la barre porte-lame (3) porte des supports de lame (11) individuels comportant les baguettes de maintien portant chacun une lame (2a), et étant séparés ou dans la prolongation l'un de l'autre ou en contact l'un avec l'autre.

2. Dispositif selon la revendication 1, **caractérisé en ce que** le tranchant (4) dépasse par rapport à la barre porte-lame (3) dans le sens de la marche.

3. Dispositif selon la revendication 1 ou 2, **caractérisé en ce que** l'inclinaison de la section transversale de la lame (2) est d'environ 5° à 35°, en particulier d'environ 10°, par rapport au sens de la marche.

4. Dispositif selon l'une des revendications 1 à 3, **caractérisé en ce que** l'inclinaison de la section transversale de la lame (2) est réglable.

5. Dispositif selon l'une des revendications 1 à 4, **caractérisé en ce que** l'inclinaison de la section transversale de la lame (2) peut être sélectionnée selon la vitesse du véhicule.

6. Dispositif selon l'une des revendications 1 à 5, **caractérisé en ce que** la barre porte-lame (3) avec la lame (2) sont réglables tant au niveau de l'inclinaison par rapport au sens de la marche qu'en hauteur.

7. Dispositif selon l'une des revendications 1 à 6, **caractérisé en ce que** les supports de lame (11) sont démontables individuellement.

8. Dispositif selon l'une des revendications 1 à 7, **caractérisé en ce que** la barre porte-lame (3) est placée à l'avant ou à l'arrière du véhicule.

9. Dispositif selon la revendication 8, **caractérisé en ce que** la barre porte-lame (3) est elle-même montée sur roues ou sur son propre châssis avec roues.

10. Dispositif selon l'une des revendications 1 à 7, **caractérisé en ce que** la barre porte-lame (3) est placée entre deux essieux du véhicule.
